# EUROPEAN PATENT SPECIFICATION

(11) **EP 1 303 899 B1**
(45) Date of publication and mention of the grant of the patent: **01.12.2010**
(21) Application number: 01931757.7
(22) Date of filing: 04.05.2001
(51) Int. Cl.: H02K 7/08, D21G 1/02, H02K 21/38

(54) **ROLL DRIVE**
WALZENANTRIEB
ENTRAINEMENT DE ROULEAU

(30) Priority: 05.05.2000 FI 20001050
(43) Date of publication of application: 23.04.2003
(73) Proprietor: ABB Research Ltd., 8050 Zürich (CH)
(72) Inventor: WELIN, Bengt, FIN-02520 Lapinkylä (FI); FRIMAN, Carl-Johan, FIN-00100 Helsinki (FI)
(74) Representative: Valkeiskangas, Tapio Lassi Paavali
(86) International application number: PCT/FI2001/000425
(87) International publication number: WO 2001/086780

(56) References cited:
- EP-A1- 0 621 133
- EP-A2- 0 689 277
- US-A- 4 820 947
- US-A- 5 918 728

## Description

### BACKGROUND OF THE INVENTION

The present invention relates to a roll drive wherein a motor is directly fixed to a roll, particularly in connection with rolls of a drying group of a paper machine.

To rotate big rolls, such as rolls of a drying group of a paper machine, big torque in a low rotational speed range is required. Previously, a great need of torque was solved by using a reduction gear and a faster electric motor, or alternatively by a squirrel-cage induction motor or a direct-current motor, the size of which is big with respect to the required power.

In connection with big rolls, such as drying cylinders of a drying group of a paper machine, a great need of torque is solved by so-called frame gears or corresponding external gears and separate reduction gears. Frame gears often connect a plurality of cylinders to the same motor. The frame gears and separate reduction gears of drying groups of a paper machine are expensive, take up space, are loud, require maintenance and waste energy. In addition, rolls connected to the same frame gear must have the same diameter or be at least in a specific relation to each other according to transmission in order to make, for instance, the paper web run in a desired way at all operational positions.

Because of the required gear, the motor has to be brought outside the machine frame to achieve a torque, which increases the need for space considerably. In addition, separate firm, and in most cases high, mounting beds must be provided for the motor and the gear. Both above mentioned drawbacks affect building and maintenance costs considerably.

At certain operational positions, such as drying groups, of paper machines and other similar machines, steam pipes and condensate pipes transmitting hot steam for instance to heat the roll from inside need to be led through a roll end. In conventional motor solutions, this is implemented by means of a gear connected to the roll. Lead-throughs for allowing pipes into the roll are implemented by using a hollow shaft in the gearbox while the motor is at the side with respect to the shaft of the roll. In connection with this kind of rolls, it was previously necessary to use a gear through which the pipes could be led.

The publication DE 4422097 A1 discloses a drive arranged to rotate a cylinder of a printing machine and comprising a radial type of motor as a motor. In the solution of the publication, the rotor of the motor is arranged directly at the shaft of the cylinder and the stator is secured to the wall to prevent the stator from rotating. The motor disclosed in the publication is very difficult to replace if there is a failure, because the rotor is directly arranged at the shaft of the roll, whereby in case of failure, the entire combination must be replaced. Therefore, the solution according to the publication is not suitable for objects where the sizes of cylinders and motors rotating them are large and where the defective motor has to be replaced quickly.

The Patent US 4820947 discloses a solution where a roll shaft is connected to a housing inside which both a motor rotating the roll and a roll bearing are mounted. The housing mentioned in the solution of the publication is supported in its entirety on a mounting bed. Because of its location, the motor inside the housing is very difficult to service or replace in case of motor failure, because the entire roll has to be removed from its place in order to handle the motor. The motor is also heavily enclosed in close proximity to the roll intended to be heated, whereupon great care is needed in cooling the motor so that the overheating of the motor does not cause problems.

### BRIEF DESCRIPTION OF THE INVENTION

An object of the present invention is to provide a roll drive which avoids the above mentioned drawbacks and enables rolls to be controlled accurately in a manner simpler than before and by utilising simpler equipment. The object is achieved by a roll drive according to the invention, which is characterized in that the drive comprises an axial flux motor comprising a hollow rotor shaft fixed to a shaft of the roll so that the shaft supports the motor, the motor being supported at its frame by means of a supporting arm on a fixed structure, and a frequency converter arranged to control the axial flux motor fixed to the shaft of the roll.

The invention is based on the idea that a flat motor with a hollow shaft is used for roll drives requiring big torque and an accurate controllability, the motor being directly fixed to the frame of the machine and to the shaft of the roll to be rotated. When it comes to costs and improving of the controllability, such a roll drive provides considerable advantages. Since the motor can be fixed directly to the shaft of the roll, there is no need for an expensive mechanical gear. Mechanical gears are components which wear and require regular maintenance and which also weaken the efficiency of the drive.

Because of the flat structure of the motor to be used, the invention also provides the significant advantage of saving space in the transverse direction, because the motor of the drive according to the invention can be placed inside a so-called hood in the drying section of a paper machine, for instance. The drives can also be placed at rolls optimal for the control, each roll can be controlled separately and the diameters of the rolls are not dependent on adjacent rolls, as in known mechanical solutions.

An additional significant advantage is also that lead-throughs into the rolls can be implemented in a manner simpler than before.

### BRIEF DESCRIPTION OF THE INVENTION

In the following, the invention will be described in greater detail in connection with preferred embodiments, with reference to the attached drawings, in which
Figure 1 schematically shows a cross-section of a roll drive according to the invention, and
Figure 2 shows a perspective view of a roll drive according to the invention.

### DETAILED DESCRIPTION OF THE INVENTION

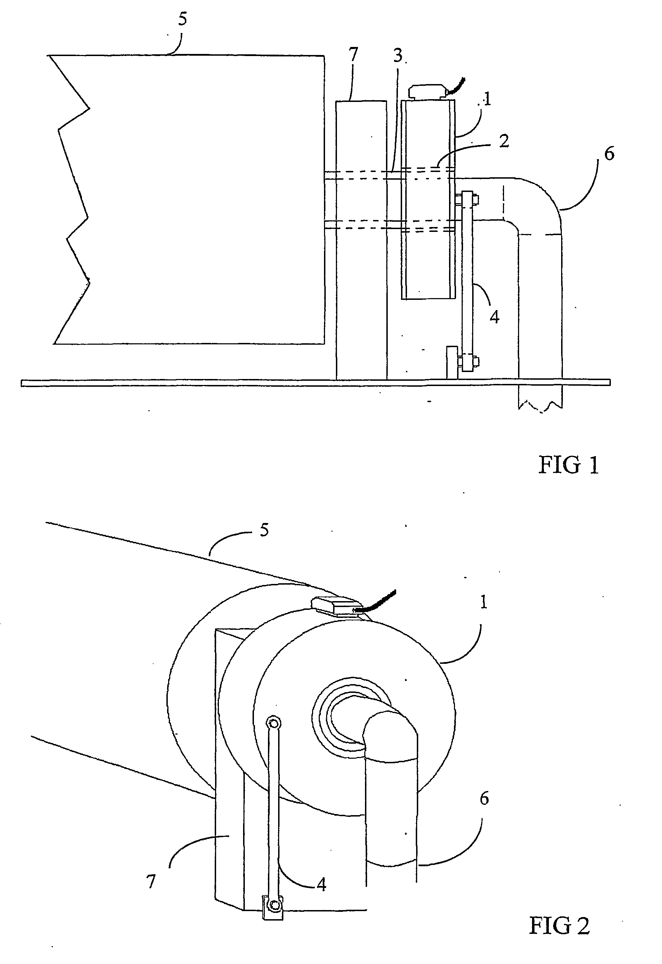

A drying group of a paper machine comprises cylindrical rolls which have a large diameter and a great weight and the accurate control of which requires reliable electric drives. Figure 1 shows a roll drive according to the invention, which may be a drying cylinder and an electric drive rotating it, for instance. The roll drive according to the invention comprises an axial flux motor 1. An axial flux motor is a motor whose rotor and stator are formed into disc-like plates the surfaces of which are provided with elements producing an electromotive force. The stator is typically provided with windings magnetisable with electric current, which are magnetised in a desired manner by using a frequency converter, for example.

The rotor of the axial flux motor 1 is permanently magnetised according to a preferred embodiment of the invention, whereby the surface of the disc-like rotor is provided with objects of a permanent magnet material in an appropriate manner. A permanent magnet rotor provides the advantages of reducing the need for cooling and providing the motor drive with a great torque. In addition, the axial flux motor thus operates as a synchronous machine which can be controlled very accurately by utilising current frequency converters. As the figures show, the structure of the axial flux motor 1 is generally disc-like and the rotor plate is between two stator plates, whereby the main flux of the motor is in the direction of the motor shaft. The axial flux motor is very suitable for the drive of the invention, because the permanent magnets of the rotor are typically placed on the outer circumference of the rotor. The distance from the permanent magnets to the axis of rotation of the rotor directly affects the magnitude of the torque obtained from the motor. The rotor of the axial flux motor need not necessarily be permanently magnetised, but the motor may also comprise a reluctance rotor or a squirrel-cage induction rotor.

The axial flux motor of the roll drive according to the invention comprises a hollow rotor shaft 2. The hollowness of the rotor shaft and particularly the large inner diameter of the hollow rotor shaft are possible because of the disc-like structure of the motor. Due to the positioning of the permanent magnets, the central part of the disc-like motor will not be used for producing torque, which allows that lead-throughs can be made through the rotor shaft without reducing the efficiency of the machine or making the machine bigger because of the hollowness of the shaft.

The axial flux motor 1 is fixed at its hollow rotor to a shaft 3 of a roll 5 so that the roll shaft supports the motor. In other words, the motor does not rest on a fixed mounting base, but is directly fixed to the roll 5. Due to the fixing manner, the motor can also be mounted on retrofit objects, which means that a reduction gear possibly used earlier and a conventional motor can be replaced by an axial flux motor. The motor can be fixed to the roll shaft similarly as current gears that are to be fixed to the roll shaft. The fixing can be carried out, for instance, so that the end of the roll shaft is provided with a cone-shaped section against which the hollow rotor shaft of the motor pushes in reliably. The cone-shaped section at the end of the shaft journal can be implemented, for example, by fixing, for instance by welding, a separate matching section to the shaft or, alternatively, by peeling the shaft end in order to have a desired conical shape. Figures 1 and 2 show that the roll is supported by a structure 7 of firm construction, comprising the bearings of the roll. As the roll is much heavier than the axial flux motor to be used, the effect of the weight of the motor need not usually be taken into account in the dimensioning of the supporting structure 7 or roll bearings.

Since the motor is fixed to the roll shaft without a separate mounting bed, the motor is supported according to the invention at its frame by means of a supporting arm 4 on the fixed structure. The support is necessary because otherwise the stator of the motor would rotate in an undesired manner. The supporting is carried out by connecting the stator of the motor to the fixed structure by means of a stiff supporting arm. The supporting arm must be so strong that in spite of great torque acting on it, the motor stays securely in its place. However, the function of the supporting arm 4, as was already explained earlier, is not the supporting of the motor. One end of the supporting arm is fixed to the motor frame and the other end is fixed to the fixed structure, such as the floor or, in connection with the floor or paper machine, the supporting structures of the machine or the like. To fix it to the floor is not always the most advantageous alternative, because the roll drive according to the invention can be placed at the desired roll. It is thus possible that the roll that needs to be controlled is the upper roll of the drying group, for instance, whereupon the height from the motor to the floor would be needlessly big to form a supporting arm extending along this distance. Thus, it is natural that the supporting arm is connected to the machine's fixed structure, located in proximity to the motor.

According to a preferred embodiment of the invention, the roll shaft 3 of the roll drive is hollow, wherefore it is possible to lead required pipes, tubes or wires through the hollow shafts of the rotor and roll into the roll. Such pipes include, for instance, steam pipes intended to heat the roll, suction pipes intended to form suction for rolls with holes, or hydraulic pipes intended for the zone adjustment of the roll. The figures show in a simple manner how a steam pipe 6 is led through the shafts into the roll.

A frequency converter or other similar device, by which the rotational speed of the motor 1 and the torque it produces can be controlled reliably and accurately, is arranged to control the roll drive. Such a frequency converter can be a frequency converter with a voltage intermediate circuit, for instance. Since, according to an embodiment, the shafts of the roll and rotor are hollow, it is desirable for the simplicity of the drive that the frequency converter controlling the drive can carry out all desired instructions regarding the torque and rotational speed without a direct feedback from the rotational speed of the roll and motor. It is cumbersome to arrange a tachometer determining the rotational speed at the hollow shafts. Therefore, good choices for frequency converters are, for instance, solutions based on direct torque control, whereby the state of the motor to be controlled can be modelled accurately and reliably after a model made of the motor, and whereby it is thus possible to avoid the mounting of the tachometer on the hollow shaft.

According to a preferred embodiment of the invention, the axial flux motor 1 comprises water cooling. As explained earlier, some roll drives have rolls that are heated with hot steam from inside. The motor is subjected to a considerable heat, because the motor is fixedly mounted on the roll shaft and said steam pipe can be led through the motor. Because of the small size of the motor in the direction of the shaft and the manner of fixing it directly to the shaft, it is possible to place the motor at optimal objects. The motor can be placed, for instance, inside the hood, i.e. the housing surrounding the drying section of the paper machine, if the motor is water-cooled according to the embodiment.

Water cooling can be implemented for example so that the supporting plate of the stator is provided with a spiral water pipe where cooling liquid is circulated. Said disc-like supporting plate is in close proximity to stator grooves containing windings, whereupon the heat produced by the motor can be transferred away from the motor efficiently. The spirally placed cooling pipe is perpendicular to the stator grooves, whereupon the cooling is efficient enough for mounting the motor in difficult thermal conditions.

It is obvious to a person skilled in the art that as technology advances, the basic idea of the invention can be implemented in a variety of ways. The invention and the embodiments thereof are thus not restricted to the examples described above, but may vary within the scope of the claims.

## Claims

1. A roll drive wherein a motor (1) is directly fixed to a roll (5), particularly in connection with rolls of a drying group of a paper machine, **characterized in that** the drive comprises
an axial flux motor (1) comprising a hollow rotor shaft (2) fixed to a shaft (3) of the roll (5) so that the shaft supports the motor (1), the motor being supported at its frame by means of a supporting arm (4) on a fixed structure, and
a frequency converter arranged to control the axial flux motor (1) fixed to the shaft (3) of the roll (5).

2. A roll drive as claimed in claim 1, **characterized in that** the roll (5), which is fixed to the rotor shaft (2) of the axial flux motor (1), comprises a hollow shaft (3), which allows that lead-throughs are made through the shafts (2, 3) of the roll (5) and motor (1) into the roll.

3. A roll drive as claimed in claim 1 or 2, **characterized in that** the rotor of the axial flux motor (1) comprises permanent magnets.

4. A roll drive as claimed in claim 1, 2 or 3, **characterized in that** the axial flux motor (1) comprises water cooling.

## Patentansprüche

1. Walzenantrieb, worin ein Motor (1) direkt an eine Walze (5) befestigt ist, insbesondere in Verbindung mit Walzen einer Trockengruppe einer Papiermaschine, **dadurch gekennzeichnet, dass** der Antrieb aufweist:
einen Axialflussmotor (1) mit einer hohlen Rotorwelle (2), die an eine Welle (3) der Walze (5) derart befestigt ist, dass die Welle den Motor (1) trägt, wobei der Rahmen der Motor von einem Stützhebel (4) auf eine feste Struktur gestützt wird, und
einen Frequenzumrichter, der angeordnet ist, den an die Welle (3) der Walze (5) befestigten Axialflussmotor (1) zu steuern.

2. Walzenantrieb nach Anspruch 1, **dadurch gekennzeichnet, dass** die Walze (5), die an die Rotorwelle (2) des Axialflussmotors (1) befestigt ist, eine hohle Welle (3) aufweist, die die Bereitstellung von Durchführungen durch die Wellen (2, 3) der Walze (5) und des Motors (1) in die Walze erlaubt.

3. Walzenantrieb nach Anspruch 1 oder 2, **dadurch gekennzeichnet, dass** der Rotor des Axialflussmotors (1) Dauermagnete aufweist.

4. Walzenantrieb nach Anspruch 1, 2 oder 3, **dadurch gekennzeichnet, dass** der Axialflussmotor (1) Wasserkühlung aufweist.

## Revendications

1. Entraînement de rouleau dans lequel un moteur (1) est directement fixé sur un rouleau (5), en particulier en raccordement avec des rouleaux d'un groupe de séchage d'une machine à papier, **caractérisé en ce que** l'entraînement comprend :
un moteur à flux axial (1) comprenant un arbre de rotor creux (2) fixé sur un arbre (3) du rouleau (5) de sorte que l'arbre supporte le moteur (1), le moteur étant supporté sur son châssis au moyen d'un bras de support (4) sur une structure fixe, et
un convertisseur de fréquence agencé pour contrôler le moteur à flux axial (1) fixé sur l'arbre (3) du rouleau (5).

2. Entraînement de rouleau selon la revendication 1, **caractérisé en ce que** le rouleau (5) qui est fixé sur l'arbre de rotor (2) du moteur à flux axial (1) comprend un arbre creux (3) qui permet que des sorties soient réalisées à travers les arbres (2, 3) du rouleau (5) et du moteur (1) dans le rouleau.

3. Entraînement de rouleau selon la revendication 1 ou 2, **caractérisé en ce que** le rotor du moteur à flux axial (1) comprend des aimants permanents.

4. Entraînement de rouleau selon la revendication 1, 2 ou 3, **caractérisé en ce que** le moteur à flux axial (1) comprend un refroidissement par eau.
